# EUROPÄISCHE PATENTSCHRIFT

(11) **EP 4 118 321 B1**
(45) Veröffentlichungstag und Bekanntmachung des Hinweises auf die Patenterteilung: **17.04.2024**
(21) Anmeldenummer: 21709921.7
(22) Anmeldetag: 02.03.2021
(51) Int. Cl.: F03D 1/02, F03D 15/10

(54) **WINDKRAFTANLAGE**
WIND POWER PLANT
CENTRALE ÉOLIENNE

(30) Priorität: 12.03.2020 DE 102020106873
(43) Veröffentlichungstag der Anmeldung: 18.01.2023
(73) Patentinhaber: Reisinger, Alois, 3375 Krummnussbaum (AT)
(72) Erfinder: Reisinger, Alois, 3375 Krummnussbaum (AT)
(74) Vertreter: Müller, Jochen
(86) Internationale Anmeldenummer: PCT/EP2021/055114
(87) Internationale Veröffentlichungsnummer: WO 2021/180511

(56) Entgegenhaltungen:
- DE-A1-102015 219 014
- NL-C- 48 251
- US-A- 909 764
- US-A- 4 242 050
- US-A1- 2014 375 061

## Beschreibung

Die Erfindung bezieht sich auf eine Windkraftanlage mit mehreren Windrädern.

Ein Windrad umfasst üblicherweise meist einen Turm oder einen Gittermast an dem oberseitig eine drehbare Gondel angeordnet ist. An der Gondel ist ein Rotor auf einer Rotorwelle drehbar gelagert, um die Windkraft in eine Drehbewegung umzuwandeln. Die Rotorwelle ihrerseits treibt entweder direkt oder über ein Getriebe einen elektrischen Generator in der Gondel an. Die so erzeugte elektrische Energie wird über entsprechende Zuleitungen, Transformatoren und Steuereinrichtungen in ein öffentliches Stromnetz zur Energieversorgung eingespeist.

Häufig sind mehrere Windräder an einem Standort zu einer Windkraftanlage zusammengefasst und werden auch als Windpark bezeichnet. Der Standort ist bevorzugt in windreichen Gegenden an Land oder im küstennahen Bereich auf See.

Weiterhin ist es bekannt, dass mehrere Windräder einer Windkraftanlage nicht jeweils unmittelbar über einen eigenen Generator elektrische Energie erzeugen, sondern dass mehrere Windräder über ein gemeinsames mechanisches Getriebe miteinander gekoppelt sind und vorzugsweise nur einen einzigen gemeinsamen elektrischen Generator zur Energieerzeugung antreiben.

Derartige Windkraftanlagen sind unter anderem aus der DE 20 2009 009 654 U1 mit einem Turm mit zwei Rotoren und aus der DE 10 2011 015 303 A1 oder der US 2014/0375061 A1 mit mindestens zwei Windrädern mit Rotoren und Rotorwellen, die beispielsweise über Kegelräder eine gemeinsame Sammelwelle antreiben, die wiederum einen einzigen Generator antreibt, bekannt.

Als nachteilig ist es jedoch hierbei anzusehen, dass die jeweiligen Windräder mechanisch starr miteinander verbunden sind, und somit beispielsweise bei unterschiedlichen Windverhältnissen die verschiedenen Windräder nicht effektiv zur Energieerzeugung beitragen können.

Der Erfindung liegt die Aufgabe zugrunde, eine Windkraftanlage anzugeben, die eine optimierte mechanische Kopplung von mehreren Windräder zum Antrieb eines gemeinsamen Generators ermöglicht.

Erfindungsgemäß wird diese Aufgabe durch die Merkmale des Anspruchs 1 gelöst.

Der Kerngedanke der Erfindung besteht darin, dass eine Windkraftanlage in an sich bekannter Weise aus mehreren im Wesentlichen gleichartigen Windrädern besteht. Jedes Windrad ist beispielsweise oberseitig an einer drehbaren Gondel auf einem bevorzugt rohrartigen Turm angeordnet. Die Drehbewegung jedes Rotors wird über eine Rotorwelle an ein mechanisches Getriebe übertragen, wobei die mehreren Windräder auf ein gemeinsames Getriebe einwirken, um dann einen einzigen gemeinsamen elektrischen Generator zur Energieerzeugung anzutreiben.

Erfindungsgemäß umfasst das mechanische Getriebe an jedem Windrad eine Exzenterwelle mit einer zugeordneten Hubstange. Diese Anordnung ist vorzugsweise dadurch realisiert, dass jede Rotorwelle als Exzenterwelle ausgebildet ist. Hierzu ist an jeder Rotorwelle eine Scheibe angeordnet, an der außermittig versetzt zur Drehachse beispielsweise über ein Kugelkopfgelenk eine Hubstange angelenkt ist. Die Scheibe kann auch auf einer eigenen Drehachse gelagert sein und von der Rotorwelle drehend angetrieben werden. Somit wird eine Drehbewegung der Rotorwelle in eine Auf und Ab Bewegung der Hubstange umgewandelt. Dies entspricht dem umgekehrten Funktionsprinzip einer Kurbelwelle mit Pleuelstangen und Zylindern in einer Verbrennungskraftmaschine.

Weiterhin sind der Hubstange zwei Sammelwellen zugeordnet, die angetrieben werden. Dabei sind an jeder Hubstange jeweils zwei mechanische Kopplungseinrichtungen angeordnet, die zur Kraftübertragung von der Hubstange beziehungsweise einem im Folgenden beschriebenen Hubteil auf jeweils eine der beiden Sammelwellen dienen. Diese Kopplungseinrichtungen verfügen dabei jeweils in einer Bewegungsrichtung, also in einer Aufwärtsbewegung oder in einer Abwärtsbewegung, der Hubstange beziehungsweise des Hubteils über einen Freilauf, bei dem sie mechanisch von der zugeordneten Sammelwelle entkoppelt sind. In der jeweils anderen Bewegungsrichtung erfolgt eine Kraftübertragung von dem sich beispielsweise vertikal bewegenden Hubteil auf eine der beiden drehbaren Sammelwellen.

Somit wird bei der durch die Exzenterwelle verursachte Auf- und Ab-Bewegung der Hubstange, beziehungsweise des Hubteils, beispielsweise bei einer Abwärtsbewegung über das Hubteil und die erste Kopplungseinrichtung die erste Sammelwelle drehend angetrieben und die andere Kopplungseinrichtung läuft relativ zur zweiten Sammelwelle im Freilauf. Bei der anschließenden Aufwärtsbewegung der Hubstange, beziehungsweise des Hubteils, läuft die erste Kopplungseinrichtung relativ zur ersten Sammelwelle im Freilauf und die zweite Kopplungseinrichtung treibt die zweite Sammelwelle drehend an.

Dabei ist die Hubstange vorzugsweise derart angeordnet, dass ihre Längsachse im Wesentlichen koaxial zur Drehachse der Gondel an der Oberseite des Turms des Windrads verläuft. Auch ihre Längserstreckung ist in vorteilhafter Weise derart gewählt, dass ihre Mitte in Längsrichtung gesehen im Wesentlichen auf halber Höhe des Turms des Windrads angeordnet ist, um eine symmetrische Bewegung der Hubstange relativ zum Turm zu erhalten.

Weiterhin ist es ersichtlich, dass an der Hubstange ein Drehgelenk vorhanden ist, um windrichtungsbedingte Drehungen der Gondel mit dem Rotor relativ zum Turm sowie dem mechanischen Getriebe mit der Hubstange auszugleichen.

Über die Sammelwellen wird dann durch eine an sich beliebig ausgestaltbare Mechanik als Teil des mechanischen Getriebes die jeweilige Drehbewegung auf den gemeinsamen Generator für alle Windräder übertragen, um elektrische Energie zu erzeugen.

Der Vorteil der Erfindung besteht darin, dass durch die Ausgestaltung des mechanischen Getriebes mit Exzenterwelle, Hubstange und Hubteil mit zwei Kopplungseinrichtungen zum Antreiben der beiden Sammelwellen die jeweiligen Windräder, die über das Getriebe miteinander gekoppelt sind, nicht alle Windräder in notwendiger Weise die stets gleichen Umdrehungszahlen aufweisen müssen. Insbesondere durch den im Folgenden beschriebenen Freilauf der Ratsche oder Knarre als Kopplungseinrichtung ist es ermöglicht, dass die Sammelwelle angetrieben durch mehrere andere Windräder sich schneller dreht als es der Bewegung beispielsweise des Hubteils eines bestimmten Windrads entspricht, das aufgrund topografischer und/oder meteorologischer Gegebenheiten momentan mit weniger Windkraft beaufschlagt wird und sich somit langsamer dreht. Das einzelne Windrad wird sozusagen derart entkoppelt, dass es nur zum Antrieb beiträgt, wenn es mit einem Mindestwert an Windkraft beaufschlagt ist.

Es versteht sich, dass der Maßstab der gesamten Windkraftanlage praktisch frei wählbar ist. Das heißt, die Windkraftanlage kann aus mehreren Windrädern mit einer jeweiligen Nabenhöhe von über 100m zusammengesetzt sein, wie es heute für kommerzielle Windkraftanlagen oder Windräder üblich ist, oder die einzelnen Windräder sind derart dimensioniert, dass sie auch von Privatpersonen auf ihren Grundstücken aufgestellt und über das Getriebe miteinander gekoppelt werden können. Dabei ist die Gesamtleistung der Windkraftanlage durch die Anzahl der Windräder vorgegeben und kann modular beliebig vergrößert und angepasst werden. Ebenso ist die Art des Windrads, also beispielsweise ein schnell oder langsam drehendes Windrad, oder eine von der Rotorform abweichende Konfiguration des Windrads beliebig wählbar. Dabei kann auch eine Drehung einer beispielsweise vertikal ausgerichteten Drehachse des Rotors, beispielsweise über Kegelräder und eine Exzenterscheibe, wiederum auf eine sich im Wesentlichen auf und ab bewegende Hubstange übertragen werden.

Weiterhin ist es vorteilhaft, dass nur ein einziger elektrischer Generator vorhanden ist, der über entsprechende Steuereinrichtungen die erzeugte elektrische Energie in ein öffentliches Stromnetz einspeist. Es entfällt die Synchronisation der Leistungen einer Vielzahl von einzelnen Generatoren.

Die Unteransprüche stellen vorteilhafte Ausgestaltungen der Erfindung dar.

Vorzugsweise ist an der Hubstange, die sich auf- und abwärts bewegt, ein Hubteil angeordnet oder ausgebildet. An dem Hubteil können die beiden Kopplungseinrichtungen zur Übertragung der im Wesentlichen vertikalen Bewegung der Hubstange in eine Drehbewegung der Sammelwellen angeordnet sein. Hierzu sind beispielsweise Zahnstangen und entsprechende Zahnräder, insbesondere mit einem Freilauf in einer Bewegungsrichtung, zur Übertragung der Bewegungsenergie vom Rotor über die Exzenterwelle und Hubstange auf die Sammelwelle vorgesehen.

Diese Kopplungseinrichtungen sind gemäß einer Weiterbildung beispielsweise nach Art einer mechanischen Werkzeugratsche oder Knarre mit Sperrklinke und Freilauf ausgebildet. Derartige Mechaniken sind in der Werkzeugtechnik bekannt und mit einer solchen Ratsche oder Knarre kann beispielsweise bei einer Abwärtsbewegung der Hubstange mit dem Hubteil die vertikale Bewegung in eine Drehbewegung einer der beiden Sammelwellen umgewandelt werden. Durch die Ausstattung mit zwei Ratschen oder Knarren kann dann die andere Ratsche oder Knarre bei der entgegengesetzten Aufwärtsbewegung der Hubstange mit Hubteil von der anderen Ratsche oder Knarre die Bewegung auf die andere Sammelwelle übertragen werden. Zur Ansteuerung der Ratschen oder Knarren dienen beispielsweis zwei parallele Arme, die von der Ratsche oder Knarre abragen und zwischen denen ein Rastvorsprung am Hubteil eingreift und diese Arme nach oben und unten verschwenkt.

Zur einfachen Ausgestaltung des Getriebes insgesamt ist vorgeschlagen, dass sich die beiden Sammelwellen gleichsinnig drehen. Dies ermöglicht einen einfachen Aufbau mit zwei gegensinnig ausgerichteten Ratschen oder Knarren am Hubteil, die jeweils in einer Bewegungsrichtung mit einer Sperrklinke versehen sind, um die Bewegung zu übertragen und in der entgegengesetzten Bewegungsrichtung mittels Freilauf die ungestörte Drehbewegung der jeweils zugeordneten Sammelwelle zu ermöglichen.

Zur Synchronisierung der beiden Sammelwellen können diese beispielsweise über mehrere Zahnräder miteinander gekoppelt sein. Bevorzugt ist jedoch eine gemeinsame Kette, ein Zahnriemen oder dergleichen vorgesehen. Mit einer solchen Kette ist auch eine gleichsinnige Drehrichtung und insbesondere eine gleich schnelle Drehung der Sammelwellen realisierbar.

Gemäß einer weiteren Ausgestaltung ist im Getriebe ein Schwungmassenausgleich vorgesehen, um Schwankungen in der Drehzahl einzelner Windräder der Windkraftanlage auszugleichen. Dies kann beispielsweise durch einen schweren mitrotierenden Körper im Getriebe realisiert werden.

Zur weiteren Kompensation von ungleichen Drehzahlen, beziehungsweise um Drehzahlschwankungen zu minimieren, ist zusätzlich ein Freilauf im Getriebe vorgesehen. Dieser kann beispielsweise an Zahnrädern, die ineinander kämmen und die Drehbewegungen übertragen, durch die Ausstattung mit Sperrklinken und Mitnehmern erfolgen, die in einer Drehrichtung das nachgeschaltete Zahnrad mitnehmen und falls die Drehzahlen nicht synchron sind, die freie Drehung dieses Zahnrads mit einer höheren Geschwindigkeit ermöglichen.

Weiterhin ist vorgeschlagen, dass eine Übersetzung im Getriebe vorgesehen ist, um vorzugsweise höhere Umdrehungszahlen zu realisieren mit der eine Welle den eigentlichen Generator drehend antreibt.

Im Rahmen der Erfindung ist es mit umfasst, dass die verschiedenen Windräder mechanisch mit einem Getriebe verbunden sind und die Drehbewegung nicht auf einen elektrischen Generator übertragen wird, sondern die mechanische Leistung zum Antrieb einer an sich beliebigen mechanischen Vorrichtung eingesetzt wird. Beispielsweise kann ein Pumpwerk, eine Mühle oder dergleichen angetrieben werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert. Die Figuren der Zeichnung zeigen:
- Fig. 1: eine Windkraftanlage in schematischer Ansicht,
- Fig. 2: eine Ausschnittvergrößerung aus einem Turm eines Windrads und
- Fig. 3: eine dazu senkrechte Ansicht.

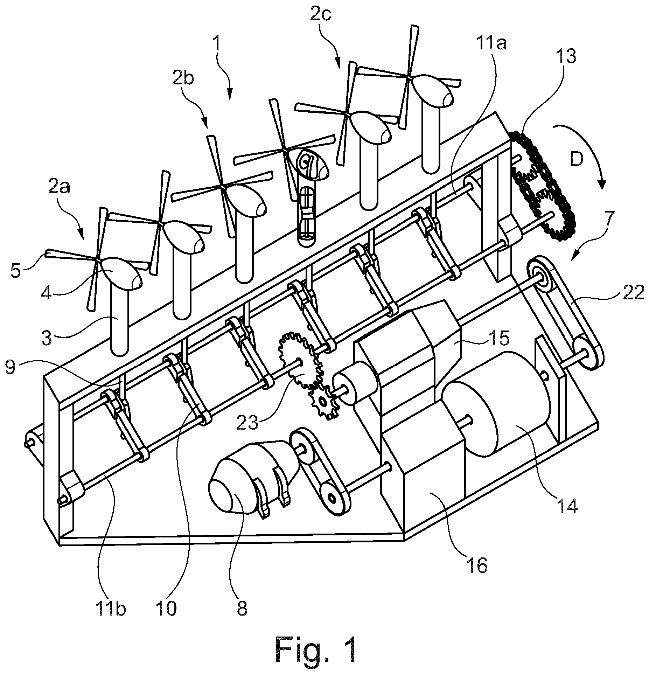

In den rein schematischen Fig. 1 bis 3 bezeichnen die gleichen Bezugszeichen jeweils die gleichen Komponenten.

In Fig. 1 ist rein schematisch eine Windkraftanlage 1 mit mehreren mechanisch gekoppelten Windrädern 2a, 2b, 2c, ... dargestellt. Jedes Windrad 2 umfasst dabei im Wesentlichen einen rohrartigen Turm 3, an dem oberseitig eine Gondel 4 um 360° frei drehbar ist. An der Gondel 4 ist ein Rotor 5 wiederum an einer Rotorwelle 6 drehbar gelagert. Mit dem Rotor 5, der hier jeweils als vierblättrige Schraube ausgebildet ist aber auch jede andere Formgebung aufweisen kann, wird die Bewegungsenergie des Winds in eine Drehbewegung umgesetzt. Diese Drehbewegungen der mehreren Rotoren 5 werden über ein mechanisches Getriebe 7 auf einen einzigen gemeinsamen elektrischen Generator 8 übertragen, der elektrische Energie erzeugt und diese über hier nicht dargestellte Ableitungen und Steuereinrichtungen in ein öffentliches Stromnetz einspeist.

Die Windräder 2, beziehungsweise deren Rotoren, treiben über eine im Folgenden beschriebenen Mechanik jeweils zwei Sammelwellen 11a, 11b an, die sich insbesondere gleichsinnig drehen D. Hierzu sind die beiden Sammelwellen 11a, 11b mit einer Kette, 13, einem Zahnriemen oder dergleichen synchronisiert und treiben über Zahnräder 23, von denen hier nur eines beispielhaft bezeichnet ist, das weitere Getriebe 7 an.

Beispielsweise wird die Drehbewegung der Zahnräder 23 zunächst an einen Freilauf 15 übertragen. Der Freilauf 15, beispielsweise mit Mitnehmern, Sperrklinken und dergleichen, im Getriebe 7 ist dazu vorgesehen, die rotierenden Sammelwellen 11a, 11b vom restlichen Getriebe 7 zu entkoppeln, falls die Windkraft nachgelassen hat und die Sammelwellen 11a, 11b sich langsamer drehen würden, als es der Umdrehungszahl des nachgeschalteten Schwungmassenausgleichs 14 entspricht. Somit ist eine Beschädigung des Getriebes 7 wirkungsvoll vermieden. Die beiden sich gleichsinnig und synchron drehenden Sammelwellen 11a, 11b treiben über einen dem Freilauf 15 nachgeschalteten Zahnriemen 23, einer Kette oder dergleichen einen Schwungmassenausgleich 14 an. Der Schwungmassenausgleich 14 ist beispielsweise als ein sich mitdrehendes schweres Gewicht im Getriebe 7 ausgebildet und gleicht geringfügige Abweichungen in der Drehzahl, mit der die Sammelwellen 11a, 11b von unterschiedlichen Windrädern 2a, 2b, 2c, ... angetrieben werden, aus.

Weiterhin ist im Getriebe 7 eine Übersetzung 16 vorgesehen, um die üblicherweise relativ langsame Umdrehungsgeschwindigkeit der Sammelwellen 11a, 11b zu erhöhen, so dass der Generator 8 mit einer zur Energieerzeugung optimalen Drehzahl angetrieben wird.

Der Freilauf 15 dient auch dazu, die eventuell nicht konstante Umdrehungszahl der Sammelwellen 11a, 11b auszugleichen. Die verschiedenen Windräder 2a, 2b, 2c, ... jeweils mit ihren Hubstangen 9 und den jeweils zugeordneten Kopplungselementen 10 übertragen üblicherweise nur eine unregelmäßige oder abgesetzte Drehbewegung auf die Sammelwellen 11a, 11b, die durch den Schwungmassenausgleich 14 vergleichmäßigt wird.

Weiterhin ist es ersichtlich, dass die einzelnen Komponenten des Getriebes 7 auch in anderen Reihenfolgen miteinander verbunden sein können, wenn dies gewünscht ist.

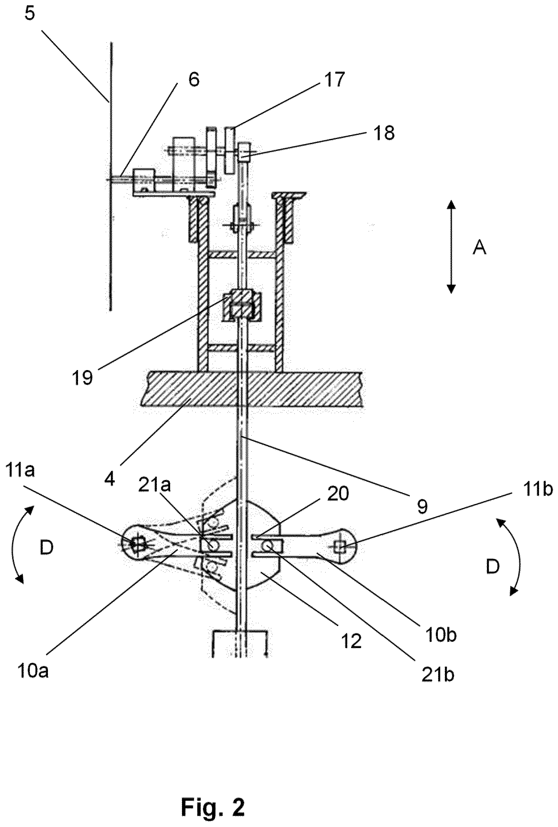

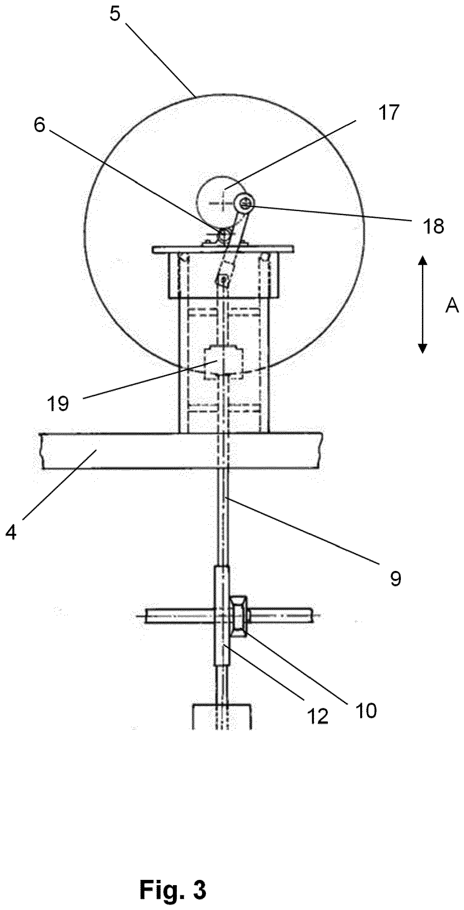

Besonders aus den Fig. 2 und 3 ist die Mechanik in einem Turm 3 beziehungsweise einer Gondel 4 eines Windrads 2 ersichtlich. In der Gondel 4, deren Gehäuse hier nur teilweise angedeutet ist, ist eine Rotorwelle 6 eines Rotors 5 drehbar gelagert. Bei einem realen Windrad 2 ist diese Rotorwelle 6 im Wesentlichen horizontal ausgerichtet. Entweder unmittelbar auf der Rotorwelle 6 oder, wie hier über weitere nur angedeutete Wellen und Zahnräder angetrieben ist eine Scheibe 17 angeordnet, die sich angetrieben durch den Rotor 5 ebenfalls dreht. Außermittig oder exzentrisch zur Drehachse der Scheibe 17 ist, wie insbesondere aus der Fig. 3 ersichtlich, eine Hubstange 9 beispielsweise über ein Kugelkopfgelenk 18 angeordnet. Somit wird eine Drehbewegung D der Scheibe 17 beziehungsweise des Rotors 5 in eine Auf- und Abwärtsbewegung A der Hubstange 9 umgewandelt.

Dabei ist die Längserstreckung der Hubstange 9 im Wesentlichen koaxial zur Längserstreckung des Turms 3 beziehungsweise zur Drehachse der Gondel 4 ausgerichtet. Auch deren Länge entspricht im Wesentlichen einer Turmhöhe, so dass innerhalb des Turms 3 eine im Wesentlichen symmetrische Bewegung der Hubstange 9 erhalten wird.

Um die Drehbewegungen der Gondel 4 relativ zum Turm 3 und damit auch zur Hubstange 9 auszugleichen ist an der Hubstange 9 ein Drehgelenk 19 ausgebildet. Dies kann auch durch sonstige mechanische Vorrichtungen realisiert werden.

An der Hubstange 9 ist ein Hubteil 12 beispielsweise in Form eines plattenförmigen Körpers angeordnet. An dem Hubteil 12 wiederum greifen zwei Kopplungselemente 10a, 10b an, um die Auf- und Abwärtsbewegung A der Hubstange 9 mit dem Hubteil 12 in eine Drehbewegung D der beiden Sammelwellen 11a, 11b umzuwandeln. Hierzu sind die beiden Kopplungselemente 10a, 10b beispielsweise als Ratsche oder Knarre ausgebildet, wie sie aus der Werkzeugtechnik bekannt sind. Eine solche Ratsche oder Knarre als Kopplungselement 10a übertragt beispielsweise eine Abwärtsbewegung der Hubstange 9 auf die Sammelwelle 10a und treibt diese beispielsweise im Uhrzeigersinn drehend an. Bei einer nachfolgenden Aufwärtsbewegung der Hubstange 9 wirkt ein Freilauf in der Ratsche oder Knarre, so dass sich die Sammelwelle 10a ungehindert drehen kann. Gleichzeitig ist das andere Kopplungselement 10b beziehungsweise die dortige Knarre oder Ratsche umgekehrt ausgebildet. Das heißt sie treibt die Sammelwelle 11b bei einer Aufwärtsbewegung der Hubstange 9 ebenfalls im Uhrzeigersinn drehend an und hat bei einer Abwärtsbewegung der Hubstange 9 einen Freilauf. Somit ist ein kontinuierlicher Antrieb der beiden Sammelwellen 11a, 11b gewährleistet, die beispielsweise mit einer Kette 13, einem Zahnriemen oder dergleichen für ein gleichsinniges und gleich schnelles Drehen gekoppelt sind. Zur Verdeutlichung der verschiedenen Bewegungszustände der Hubstange 9 und der Kopplungselemente 10a, 10b sind in Fig. 2 auf der linken Seite verschiedene Positionen des Kopplungselements 10a und des Hubteils 12 gestrichelt eingezeichnet.

Zum Zusammenwirken der Kopplungselemente 10a, 10b mit den Sammelwellen 11a, 11b und der Hubstange 9 beziehungsweise dem Hubteil 12 sind an dem Hubteil 12 zwei Rastvorsprünge 21a, 21b ausgebildet, die jeweils von zwei Armen 20 des Kopplungselements 10 umgriffen sind und derart die Auf- und Abbewegung A des Hubteils 12 auf die Sammelwelle 11 übertragen.

In Fig. 3 ist nur ein Kopplungselement 10 angedeutet, das im Wesentlichen senkrecht zur Zeichenebene ausgerichtet ist.

Der Maßstab der Windkraftanlage 1 kann in an sich bekannter Weise gewählt werden. Es können mehrere Windräder 2 mit Nabenhöhen von über 100m zusammengeschaltet werden oder die Windräder 2 sind für einen privaten Gebrauch dimensioniert. Die Windräder 2 können in beliebiger Anzahl über die Sammelwellen 11a, 11b zusammengeschaltet werden, um modular die gewünschte elektrische Leistung zu erhalten.

### Bezugszeichenliste

- 1: Windkraftanlage
- 2: Windrad
- 3: Turm
- 4: Gondel
- 5: Rotor
- 6: Rotorwelle
- 7: Getriebe
- 8: Generator
- 9: Hubstange
- 10: Kopplungselement
- 11: Sammelwelle
- 12: Hubteil
- 13: Kette
- 14: Schwungmassenausgleich
- 15: Freilauf
- 16: Übersetzung
- 17: Scheibe
- 18: Kugelkopfgelenk
- 19: Drehgelenk
- 20: Arm
- 21: Rastvorsprung

- A: Auf- und Abwärtsbewegung von 9, 12
- D: Drehbewegung von 11

## Patentansprüche

1. Windkraftanlage (1) mit mehreren Windrädern (2a, 2b, 2c, ...), wobei jedes Windrad (2) einen Turm (3) mit einer drehbaren Gondel (4) und einen Rotor (5) an der Gondel (4) mit einer Rotorwelle (6) umfasst und mehrere Windräder (2a, 2b, 2c, ...) über ein mechanisches Getriebe (7) miteinander gekoppelt sind, um einen gemeinsamen Generator (8) zur Erzeugung elektrischer Energie anzutreiben, **dadurch gekennzeichnet, dass** das Getriebe (7) derart ausgebildet ist, dass jede Rotorwelle (6) als Exzenterwelle ausgebildet ist, die mit einer Hubstange (9) zusammenwirkt, wobei von der Hubstange (9) eine Auf- und Abwärtsbewegung (A) über zwei Kopplungselemente (10a, 10b) auf zwei Sammelwellen (11a, 11b) jeweils in eine Drehbewegung (D) übertragbar ist und die Sammelwellen (11a, 11b) zum Antreiben des gemeinsamen Generators (8) eingerichtet sind.

2. Windkraftanlage (1) nach Anspruch 1, **dadurch gekennzeichnet,** an der Hubstange (9) ein Hubteil (12) ausgebildet ist, an dem die Kopplungselemente (10a, 10b) angeordnet sind.

3. Windkraftanlage (1) nach Anspruch 1 oder 2, **dadurch gekennzeichnet, dass** die Kopplungselemente (10a, 10b) als Ratsche ausgebildet sind.

4. Windkraftanlage (1) nach einem der Ansprüche 1 bis 3, **dadurch gekennzeichnet, dass** die Sammelwellen (11a, 11b) sich gleichsinnig drehen.

5. Windkraftanlage (1) nach einem der Ansprüche 1 bis 4, **dadurch gekennzeichnet, dass** die Sammelwellen (11a, 11b) über eine Kette (13), einen Zahnriemen oder dergleichen miteinander verbunden sind.

6. Windkraftanlage (1) nach einem der Ansprüche 1 bis 5, **dadurch gekennzeichnet, dass** im Getriebe (7) ein Schwungmassenausgleich (14) vorgesehen ist.

7. Windkraftanlage (1) nach einem der Ansprüche 1 bis 6, **dadurch gekennzeichnet, dass** im Getriebe ein (7) ein Freilauf (15) vorgesehen ist.

8. Windkraftanlage (1) nach einem der Ansprüche 1 bis 7, **dadurch gekennzeichnet, dass** im Getriebe (7) eine Übersetzung (16) vorgesehen ist.

## Claims

1. Wind turbine (1) comprising a plurality of wind wheels (2a, 2b, 2c,...), each wind wheel (2) comprising a tower (3) having a rotatable nacelle (4) and a rotor (5) on the nacelle (4) which has a rotor shaft (6), and a plurality of wind wheels (2a, 2b, 2c,...) are coupled to one another via a mechanical transmission (7) in order to drive a common generator (8) for generating electrical power,
**characterized in that** the transmission (7) is designed such that each rotor shaft (6) is designed as an eccentric shaft which interacts with a lifting rod (9), it being possible for an upward and downward movement (A) to be transmitted from the lifting rod (9) via two coupling elements (10a, 10b) to two collecting shafts (11a, 11b) in a rotational movement (D), and the collecting shafts (11a, 11b) being configured to drive the common generator (8).

2. Wind turbine (1) according to claim 1, **characterized in that** a lifting part (12) on which the coupling elements (10a, 10b) are arranged is formed on the lifting rod (9).

3. Wind turbine (1) according to either claim 1 or claim 2,
**characterized in that** the coupling elements (10a, 10b) are designed as a ratchet.

4. Wind turbine (1) according to any of claims 1 to 3, **characterized in that** the collecting shafts (11a, 11b) rotate in the same direction.

5. Wind turbine (1) according to any of claims 1 to 4, **characterized in that** the collecting shafts (11a, 11b) are connected to one another via a chain (13), a toothed belt or the like.

6. Wind turbine (1) according to any of claims 1 to 5, **characterized in that** a flywheel mass compensation (14) is provided in the transmission (7).

7. Wind turbine (1) according to any of claims 1 to 6, **characterized in that** a freewheel (15) is provided in the transmission (7).

8. Wind turbine (1) according to any of claims 1 to 7, **characterized in that** a transmission ratio (16) is provided in the transmission (7).

## Revendications

1. Système éolien (1) comportant plusieurs éoliennes (2a, 2b, 2c, ...), dans lequel chaque éolienne (2) comprend un mât (3), lequel comporte une nacelle (4) rotative, et un rotor (5) sur la nacelle (4), lequel comporte un arbre de rotor (6), et plusieurs éoliennes (2a, 2b, 2c, ...) sont accouplées entre elles par l'intermédiaire d'une transmission (7) mécanique afin d'entraîner un générateur (8) commun permettant de produire de l'énergie électrique, **caractérisé en ce que** la transmission (7) est réalisée de telle sorte que chaque arbre de rotor (6) est réalisé sous forme d'arbre excentrique qui coopère avec une tige de levage (9), dans lequel un mouvement ascendant et descendant (A) peut être transmis par la tige de levage (9), par l'intermédiaire de deux éléments d'accouplement (10a, 10b), à deux arbres collecteurs (11a, 11b) respectivement en un mouvement de rotation (D) et les arbres collecteurs (11a, 11b) sont conçus pour entraîner le générateur (8) commun.

2. Système éolien (1) selon la revendication 1, **caractérisé en ce qu'**une partie de levage (12) est réalisée sur la tige de levage (9), sur laquelle partie de levage sont disposés les éléments d'accouplement (10a, 10b).

3. Système éolien (1) selon la revendication 1 ou 2, **caractérisé en ce que** les éléments d'accouplement (10a, 10b) sont réalisés sous forme de cliquets.

4. Système éolien (1) selon l'une des revendications 1 à 3,
**caractérisé en ce que** les arbres collecteurs (11a, 11b) tournent dans le même sens.

5. Système éolien (1) selon l'une des revendications 1 à 4,
**caractérisé en ce que** les arbres collecteurs (11a, 11b) sont reliés entre eux par l'intermédiaire d'une chaîne (13), d'une courroie crantée ou similaire.

6. Système éolien (1) selon l'une des revendications 1 à 5,
**caractérisé en ce qu'un** moyen d'équilibrage de la masse d'inertie (14) est prévu dans la transmission (7).

7. Système éolien (1) selon l'une des revendications 1 à 6,
**caractérisé en ce qu'**une roue libre (15) est prévue dans la transmission (7).

8. Système éolien (1) selon l'une des revendications 1 à 7,
**caractérisé en ce qu'**un démultiplicateur (16) est prévu dans la transmission (7).
